(19) Europäisches Patentamt
European Patent Office
Office européen des brevets

(11) **EP 4 451 538 A1**

(12) **EUROPEAN PATENT APPLICATION**

(43) Date of publication:
**23.10.2024 Bulletin 2024/43**

(21) Application number: **24170770.2**

(22) Date of filing: **17.04.2024**

(51) International Patent Classification (IPC):
***H02M 3/335*** (2006.01)  ***H02M 1/08*** (2006.01)
***H02M 1/36*** (2007.01)

(52) Cooperative Patent Classification (CPC):
**H02M 1/08; H02M 1/0054; H02M 1/36;
H02M 3/33592**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.04.2023 CN 202310460209**

(71) Applicant: **Huawei Digital Power Technologies
Co., Ltd.
Shenzhen, Guangdong 518043 (CN)**

(72) Inventors:
• **ZHANG, Xinzhong
Shenzhen, 518043 (CN)**
• **CHEN, Miaoxin
Shenzhen, 518043 (CN)**
• **XU, Honglei
Shenzhen, 518043 (CN)**

(74) Representative: **Gill Jennings & Every LLP
The Broadgate Tower
20 Primrose Street
London EC2A 2ES (GB)**

(54) **DRIVE CIRCUIT SYSTEM**

(57)  Embodiments of this application provide a drive circuit system, including a processing unit, a control unit, and a drive unit. The processing unit is configured to determine a current wave transmission mode of a rectifier transistor, and send a first signal based on the current wave transmission mode of the rectifier transistor. The control unit is configured to receive the first signal, and determine a first output voltage based on the first signal, where the first output voltage is used to supply power to the drive unit. The drive unit is configured to drive the rectifier transistor. Based on the foregoing technical solution, when the rectifier transistor works in a variable frequency state, dynamic power consumption change amplitude of a drive circuit of the rectifier transistor can be reduced. This can reduce design difficulty and complexity of a power supply circuit of the drive circuit of the rectifier transistor.

FIG. 1

**Description**

**TECHNICAL FIELD**

Embodiments of this application relate to the power electronics field, and more specifically, to a drive circuit system and a circuit driving method.

**BACKGROUND**

To meet requirements of a communication power supply for high power density and high efficiency, a synchronous rectification technology is widely used in a direct current-direct current DC-DC power converter. Because conducted power consumption of a rectifier diode is high, a transistor may be used to replace a rectifier diode in a synchronous rectifier circuit.

In a soft start phase, to avoid drop of an output voltage caused by direct switching of a synchronous rectifier transistor from a wave-off mode to a complementary wave transmission mode, the synchronous rectifier transistor gradually transits to the complementary wave transmission mode from a rectification slow-spread wave transmission mode.

However, because a wave transmission frequency in the rectification slow-spread wave transmission mode is twice a wave transmission frequency in the complementary wave transmission mode, in the rectification slow-spread wave transmission mode, dynamic power consumption of a drive circuit of a rectifier transistor in a synchronous rectifier circuit is twice that of the complementary wave transmission mode. Consequently, dynamic power consumption change amplitude of the drive circuit of the rectifier transistor is increased when the rectifier transistor works under variable frequency, and design difficulty and complexity of a power supply circuit of the drive circuit of the rectifier transistor are increased.

Based on this, this application aims to provide a drive circuit system, so that when the rectifier transistor works in a variable frequency state, dynamic power consumption change amplitude of the drive circuit of the rectifier transistor can be reduced, to reduce the design difficulty and complexity of the power supply circuit of the drive circuit of the rectifier transistor.

**SUMMARY**

Embodiments of this application provide a drive circuit system, so that when a rectifier transistor works in a variable frequency state, dynamic power consumption change amplitude of a drive circuit of the rectifier transistor can be reduced, to reduce design difficulty and complexity of a power supply circuit of the drive circuit of the rectifier transistor.

According to a first aspect, a drive circuit system is provided, including: a processing unit, configured to determine a current wave transmission mode of a rectifier transistor, and send a first signal based on the current wave transmission mode of the rectifier transistor; a control unit, configured to receive the first signal, and determine a first output voltage based on the first signal, where the first output voltage is used to supply power to a drive unit; and the drive unit, configured to drive the rectifier transistor.

In the technical solution of this application, the processing unit determines the current wave transmission mode of the rectifier transistor, and sends the first signal to the control unit based on the current wave transmission mode of the rectifier transistor. After receiving the first signal, the control unit determines the first output voltage based on the first signal, where the first output voltage is used to supply power to the drive unit, so that the drive unit drives the rectifier transistor. Based on the foregoing technical solution, when the rectifier transistor works in a variable frequency state, dynamic power consumption change amplitude of a drive circuit of the rectifier transistor can be reduced. This can reduce design difficulty and complexity of a power supply circuit of the drive circuit of the rectifier transistor.

With reference to the first aspect, in some implementations of the first aspect, that the processing unit sends the first signal based on the current wave transmission mode of the rectifier transistor includes: When the current wave transmission mode is a first wave transmission mode, the first signal is a first value; or when the current wave transmission mode is a second wave transmission mode, the first signal is a second value, where a wave transmission frequency of the second wave transmission mode is N times a wave transmission frequency of the first wave transmission mode, and N is an integer greater than or equal to 2. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the first aspect, in some implementations of the first aspect, that the control unit determines the first output voltage based on the first signal includes: When the first signal is the first value, the control unit determines that a value of the first output voltage is a first voltage value; or when the first signal is the second value, the control unit determines that a value of the first output voltage is a second voltage value, where the first voltage value is greater than the second voltage value. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the first aspect, in some implementations of the first aspect, the control unit includes a digital-to-analog converter DAC unit, the first signal includes a voltage digital signal, the first value includes a first voltage numerical value, and the second value includes a second voltage numerical value. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the first aspect, in some implementations of the first aspect, that the control unit determines the first output voltage based on the first signal further includes: When the voltage digital signal is the first voltage numerical value, the DAC unit determines that a value of the first output voltage is a third voltage value, where the third voltage value is a voltage value obtained by performing digital-to-analog conversion on the first voltage numerical value by the DAC unit; or when the voltage digital signal is the second voltage numerical value, the DAC unit determines that a value of the first output voltage is a fourth voltage value, where the fourth voltage value is a voltage value obtained by performing digital-to-analog conversion on the second voltage numerical value by the DAC unit, and the third voltage value is greater than the fourth voltage value. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the first aspect, in some implementations of the first aspect, the first wave transmission mode includes a complementary wave transmission mode, and the second wave transmission mode includes a rectification slow-spread wave transmission mode or a wave-off mode. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the first aspect, in some implementations of the first aspect, the drive circuit system further includes a voltage boost unit, where the voltage boost unit is configured to perform voltage boosting on the first output voltage, to obtain a second output voltage.

With reference to the first aspect, in some implementations of the first aspect, the rectifier transistor includes a rectifier diode or a transistor.

According to a second aspect, a power supply method is provided, where the power supply method is used in a drive circuit system, the drive circuit system includes a processing unit, a control unit, and a drive unit, and the method includes: The processing unit determines a current wave transmission mode of a rectifier transistor, and sends a first signal based on the current wave transmission mode of the rectifier transistor; and the control unit receives the first signal, and determines a first output voltage based on the first signal, where the first output voltage is used to supply power to the drive unit.

In the technical solution of this application, the processing unit determines the current wave transmission mode of the rectifier transistor, and sends the first signal to the control unit based on the current wave transmission mode of the rectifier transistor. After receiving the first signal, the control unit determines the first output voltage based on the first signal, where the first output voltage is used to supply power to the drive unit, so that the drive unit drives the rectifier transistor. Based on the foregoing technical solution, when the rectifier transistor works in a variable frequency state, dynamic power consumption change amplitude of a drive circuit of the rectifier transistor can be reduced. This can reduce design difficulty and complexity of a power supply circuit of the drive circuit of the rectifier transistor.

With reference to the second aspect, in some implementations of the second aspect, that the processing unit is configured to send a first signal based on the current wave transmission mode of the rectifier transistor includes: When the current wave transmission mode is a first wave transmission mode, the first signal is a first value; or when the current wave transmission mode is a second wave transmission mode, the first signal is a second value, where a wave transmission frequency of the second wave transmission mode is N times a wave transmission frequency of the first wave transmission mode, and N is an integer greater than or equal to 2. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the second aspect, in some implementations of the second aspect, that the control unit determines a first output voltage based on the first signal includes: When the first signal is the first value, the control unit determines that a value of the first output voltage is a first voltage value; or when the first signal is the second value, the control unit determines that a value of the first output voltage is a second voltage value, where the first voltage value is greater than the second voltage value. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the second aspect, in some implementations of the second aspect, the control unit includes a digital-to-analog converter DAC unit, the first signal includes a voltage digital signal, the first value includes a first voltage numerical value, and the second value includes a second voltage numerical value. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the second aspect, in some implementations of the second aspect, that the control unit determines a first output voltage based on the first signal further includes: When the voltage digital signal is the first voltage numerical value, the DAC unit determines that a value of the first output voltage is a third voltage value, where the third voltage value is a voltage value obtained by performing digital-to-analog conversion on the first voltage numerical value by the DAC unit; or when the voltage digital signal is the second voltage numerical value, the DAC unit determines that a value of the first output voltage is a fourth voltage value, where the fourth voltage value is a voltage value obtained by performing digital-to-analog conversion on the second voltage numerical value by the DAC unit, and the third voltage value is greater than the fourth voltage value. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the second aspect, in some implementations of the second aspect, the first wave transmission mode includes a complementary wave transmission mode, and the second wave transmission mode includes a rectification slow-spread wave transmission mode or a wave-off mode. Based on the foregoing technical solution, when the rectifier transistor works in the variable frequency state, the dynamic power consumption change amplitude of the drive circuit of the rectifier transistor can be reduced. This can reduce the design difficulty and complexity of the power supply circuit of the drive circuit of the rectifier transistor.

With reference to the second aspect, in some implementations of the second aspect, the drive circuit system further includes a voltage boost unit, and the method further includes: The voltage boost unit performs voltage boosting on the first output voltage, to obtain a second output voltage.

With reference to the second aspect, in some implementations of the second aspect, the rectifier transistor includes a rectifier diode or a transistor.

## BRIEF DESCRIPTION OF DRAWINGS

FIG. 1 is a diagram of a topology structure of a half-bridge converter;
FIG. 2 is a schematic diagram of three specific wave transmission modes of synchronous rectifier transistors;
FIG. 3 is a schematic diagram of a structure of a front-end drive circuit of a gate drive voltage of a synchronous rectifier transistor;
FIG. 4 is a schematic diagram of a structure of a drive circuit system 400 according to an embodiment of this application;
FIG. 5 is a schematic diagram of a structure of another drive circuit system 400 according to an embodiment of this application;
FIG. 6 is a schematic diagram of a structure of still another drive circuit system 400 according to another embodiment of this application; and
FIG. 7 is a schematic flowchart of a power supply method 700 according to an embodiment of this application.

## DESCRIPTION OF EMBODIMENTS

The following describes technical solutions of embodiments in this application with reference to accompanying drawings.

First, technical terms in embodiments of this application are described.

Synchronous rectification technology: In the synchronous rectification technology, a power MOSFET transistor with extremely low on-state resistance replaces a rectifier diode, which can greatly reduce a loss of a rectifier circuit, improve efficiency of a DC-DC DC/DC converter, and meet requirements of a low-voltage and high-current rectifier.

Rectifier diode: The rectifier diode is a semiconductor device that converts alternating current electric energy into direct current electric energy, and usually includes a PN junction and has two terminals: a positive terminal and a negative terminal. The most important characteristic of the rectifier diode is unidirectional conductivity. To be specific, in a circuit, a current can only flow in from a positive electrode of the rectifier diode and flow out from a negative electrode of the rectifier diode.

Transistor: The transistor is any single component based on semiconductor materials. The transistor has a plurality of functions, such as detection, rectification, amplification, switching, voltage regulation, and signal modulation, and can be used for various digital and analog functions.

Digital-to-analog converter: The digital-to-analog converter (digital-to-analog converter, DAC), also called a D/A converter, or DAC for short, is a device that converts a digital parameter into an analog parameter.

Pulse width modulation (pulse width modulation, PWM): Pulse width modulation is an analog control mode, and modulates bias of a base electrode of a transistor or a gate electrode of a MOS transistor based on a change in a corresponding load to change conducted time of the transistor or MOS transistor, to change an output of a switch regulated power supply. This method can keep an output voltage of the power supply constant when a working condition changes, and is a very effective technology to control an analog circuit by using a digital signal of a microprocessor.

To meet requirements of a communication power supply for high power density and high efficiency, a synchronous rectification technology is widely used in a direct current-direct current DC-DC power converter. Because the rectifier diode generates large turned-on power consumption, a transistor may be used to replace a rectifier diode in a synchronous rectifier circuit.

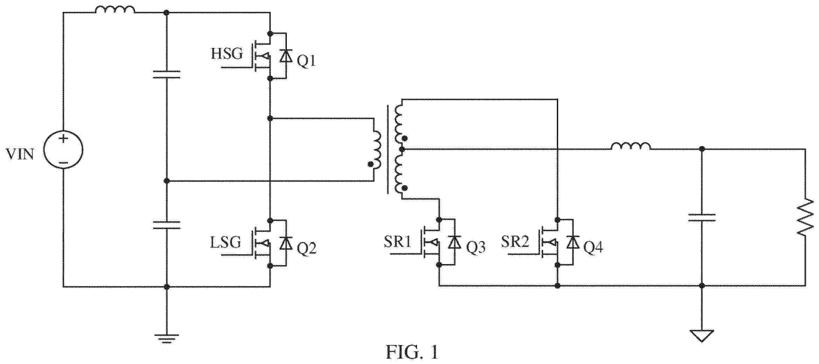

FIG. 1 is a diagram of a topology structure of a half-bridge converter. As shown in FIG. 1, Q1 and Q2 are main switch transistors, Q3 and Q4 are synchronous rectifier transistors, HSG and LSG are gate drive voltages of the main switch transistors, and SRI and SR2 are gate drive voltages of the synchronous rectifier transistors.

In a soft start phase, to avoid a drop of an output voltage of a synchronous rectifier circuit when a rectifier transistor in the synchronous rectifier circuit is directly switched from a wave-off mode to a complementary wave transmission mode, the rectifier transistor in the synchronous rectifier circuit uses a rectification slow-spread wave transmission mode as an intermediate transition mode, in other words, the rectifier transistor switches from the wave-off mode to the rectification slow-spread wave transmission mode, and then gradually switches from the rectification slow-spread wave transmission mode to the complementary wave transmission mode.

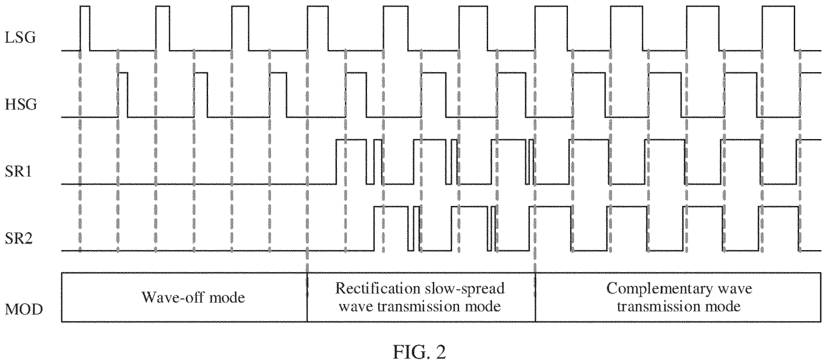

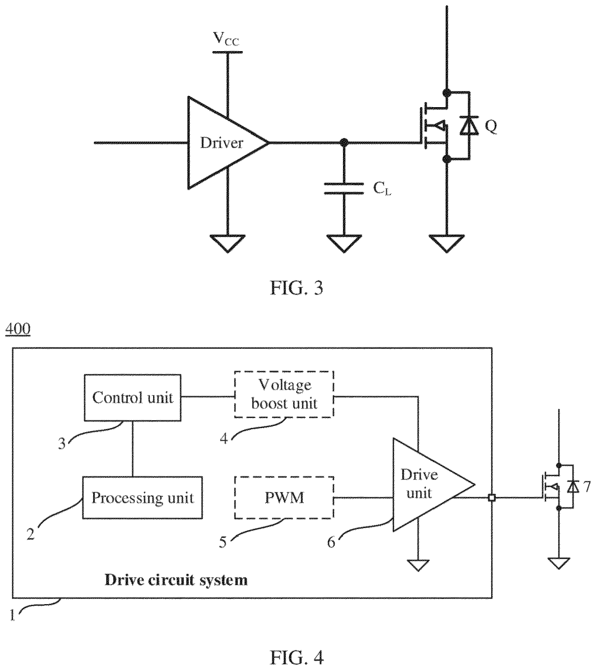

Refer to FIG. 2 and FIG. 3. FIG. 2 is a schematic diagram of three specific wave transmission modes of a rectifier transistor in a synchronous rectifier circuit. The three specific wave transmission modes: a wave-off mode, a rectification slow-spread wave transmission mode, and a complementary wave transmission mode. It can be seen from FIG. 2 that a wave transmission frequency in the rectification slow-spread wave transmission mode is twice a wave transmission frequency in the complementary wave transmission mode.

FIG. 3 is a schematic diagram of a structure of a front-end drive circuit of a gate drive voltage of a rectifier transistor in a synchronous rectifier circuit. As shown in FIG. 3, "Driver" is a drive circuit, "VCC" is a power supply voltage of the drive circuit, "Q" is a rectifier transistor, and "CL" is a total capacitance of a gate electrode to ground of the rectifier transistor.

It should be noted that the dynamic power consumption of the drive circuit of the rectifier transistor may be calculated according to the following formula (1).

$$P = C_L \cdot f \cdot V_{cc}^{2} \qquad \qquad \text{Formula (1)}$$

$Q$ is a rectifier transistor, $C_L$ is a total capacitance of a gate electrode to the ground of the rectifier transistor, and $f$ is a frequency at which the rectifier transistor is conducted or cut off.

With reference to FIG. 2, because the wave transmission frequency in the rectification slow-spread wave transmission mode is twice the wave transmission frequency in the complementary wave transmission mode, it is not difficult to obtain from formula (1) that the dynamic power consumption of the drive circuit in the synchronous rectifier circuit in the rectification slow-spread wave transmission mode is twice the dynamic power consumption of the drive circuit in the synchronous rectifier circuit in the complementary wave transmission mode. Therefore, dynamic power consumption change amplitude of the drive circuit of the rectifier transistor is increased, and design difficulty and complexity of a power supply circuit of the drive circuit of the rectifier transistor are increased.

Based on this, this application aims to provide a drive circuit system, so that when the rectifier transistor works in a variable frequency state, the dynamic power consumption change amplitude of the drive circuit of the rectifier transistor can be reduced, to reduce the design difficulty and complexity of the power supply circuit of the drive circuit of the rectifier transistor.

FIG. 4 is a schematic diagram of a structure of a drive circuit system 400 according to an embodiment of this application. As shown in FIG. 4, the drive circuit system 1 includes a processing unit 2, a control unit 3, a drive unit 6, and a rectifier transistor 7.

An output end of the processing unit 2 is connected to an input end of the control unit 3, an output end of the control unit 3 is connected to an input end of the drive unit 6, the drive unit 6 includes two output ends, one output end is grounded, the other output end is connected to an input end of the rectifier transistor 7, and the drive unit 6 is configured to drive the rectifier transistor 7.

Specifically, the processing unit 2 is configured to determine a current wave transmission mode of the rectifier transistor 7, generate a first signal based on the current wave transmission mode of the rectifier transistor 7, and send the first signal to the control unit 3. The control unit 3 is configured to receive the first signal, and determine a first output voltage based on the first signal, where the first output voltage is used to supply power to the drive unit 6, so that the drive unit 6 drives the rectifier transistor 7.

It should be noted that the processing unit 2 may determine the current wave transmission mode of the rectifier transistor 7 based on a detected current wave transmission frequency of the rectifier transistor 7, or the drive circuit system 1 may notify the processing unit 2 of the current wave transmission mode of the rectifier transistor 7. It should be understood that, for a case in which the processing unit 2 determines the current wave transmission mode of the rectifier transistor 7, refer to the conventional technology. This is not limited in this embodiment of this application.

It should be further noted that the processing unit 2 may also be referred to as a state machine unit 2. It should be understood that this is not limited in this embodiment of this application.

Optionally, in a possible implementation, when the processing unit 2 determines that the current wave transmission mode of the rectifier transistor 7 is a first wave transmission mode, the first signal is a first value. When the processing unit 2 determines, when the current wave transmission mode of the rectifier transistor 7 is a second wave transmission mode, that the first signal is a second value.

It should be noted that, a wave transmission frequency of the second wave transmission mode is N times a wave transmission frequency of the first wave transmission mode, and N is an integer greater than or equal to 2. Descriptions are provided below by using an example in which the first wave transmission mode is a complementary wave transmission mode, and the second wave transmission mode is a wave-off mode or a rectification slow-spread wave transmission mode. A wave transmission frequency in the rectification slow-spread wave transmission mode is twice a wave transmission frequency in the complementary wave transmission mode.

For example, the first signal may be a selection signal (mod-sel), and the control unit 3 may be a selection switching unit 31.

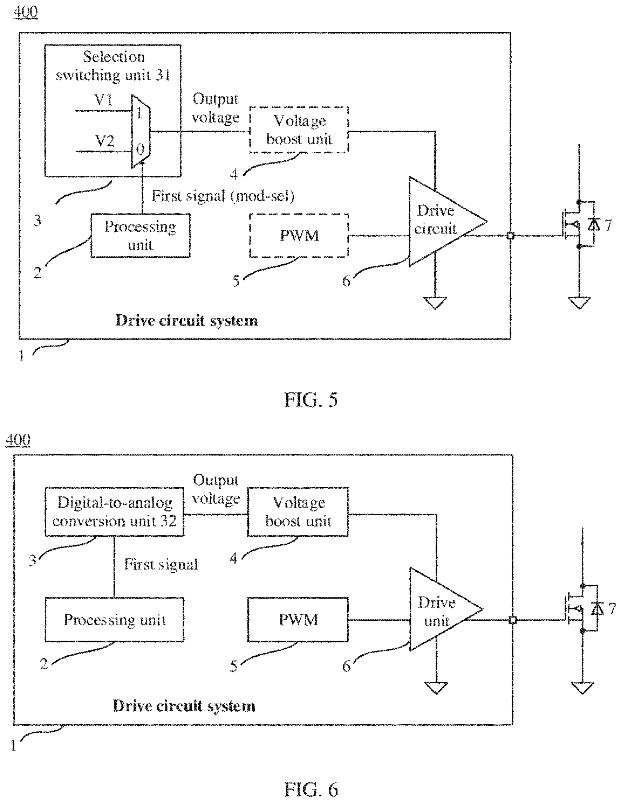

FIG. 5 is a schematic diagram of a structure of another drive circuit system 400 according to an embodiment of this application. As shown in FIG. 5, the drive circuit system 1 includes a processing unit 2, a selection switching unit 31, a drive unit 6, and a rectifier transistor 7.

Specifically, an output end of the selection switching unit 31 is connected to the drive circuit 6, and is configured to output a first output voltage.

Specifically, when the first wave transmission mode includes a complementary wave transmission mode, in other words, when the processing unit 2 determines that the current wave transmission mode of the rectifier transistor 7 is the complementary wave transmission mode, the processing unit 2 generates a selection signal (mod-sel), and a value of the selection signal is a first value, for example, mod-sel=1. Then, the processing unit 2 sends the selection signal (mod-sel) to the selection switching unit 31.

Further, the selection switching unit 31 receives the first signal (the selection signal (mod-sel)); and when a value of the received first signal is the first value, for example, mod-sel=1, the selection switching unit 31 determines that a value of the first output voltage is a first voltage value V1, and outputs the first voltage value V1 to the drive unit 6. That is, the selection switching unit 31 supplies power to the drive unit 6 by using the first voltage value V1.

Optionally, in a possible implementation, when the processing unit 2 determines that the current wave transmission mode of the rectifier transistor 7 is a second wave transmission mode, the first signal is a second value.

For example, the first signal may be a selection signal (mod-sel), and the control unit 3 may be the selection switching unit 31.

Specifically, the second wave transmission mode includes either a wave-off mode or a rectification slow-spread wave transmission mode. For example, when the processing unit 2 determines that the current wave transmission mode of the rectifier transistor 7 is the wave-off mode, the processing unit 2 generates the selection signal (mod-sel); and when the selection signal is the second value, for example, mod-sel=0, the processing unit 2 sends the selection signal (mod-sel) to the selection switching unit 31.

Further, when a value of the received first signal (selection signal (mod-sel)) is the second value, for example, mod-sel=0, the selection unit 31 determines that a value of the first output voltage is a second voltage value V2, and the selection unit 31 outputs the second voltage value V2 to the drive unit 6, that is, the selection switching unit 31 supplies power to the drive unit 6 by using the second voltage value V2.

For example, when the processing unit 2 determines that the current wave transmission mode of the rectifier transistor 7 is the rectification slow-spread wave transmission mode, the processing unit 2 generates the selection signal (mod-sel); and when the selection signal is the second value, for example, mod-sel=0, the processing unit 2 sends the selection signal (mod-sel) to the selection switching unit 31.

Further, when a value of the received first signal (selection signal (mod-sel)) is the second value, for example, mod-sel=0, the selection unit 31 determines that a value of the first output voltage is a second voltage value V2, and the selection unit 31 outputs the second voltage value V2 to the drive unit 6, that is, the selection switching unit 31 supplies power to the drive unit 6 by using the second voltage value V2.

It should be noted that the first voltage value V1 is greater than the second voltage value V2. The reason is that a wave transmission frequency in the rectification slow-spread wave transmission mode or the wave-off mode is twice a wave transmission frequency in the complementary wave transmission mode. Therefore, it can be learned from the foregoing formula (1) that, to ensure that the dynamic power consumption of the drive circuit of the synchronous rectifier transistor changes slightly when the synchronous rectifier transistor works under variable frequency, the first voltage value V1 in the complementary wave transmission mode needs to be greater than the second voltage value V2 in the rectification slow-spread wave transmission mode or the wave-off mode when the drive circuit is designed to work under variable frequency.

It should be further noted that the value of the first signal is only an example for description. It should be understood that this is not limited in this embodiment of this application.

Optionally, in a possible implementation, the drive circuit system 1 further includes a voltage boost unit 4.

Specifically, as shown in FIG. 4, an input end of the voltage boost unit 4 is connected to an output end of the control unit 3, and is configured to perform voltage boosting on the first output voltage output by the control unit 3 to obtain a second output voltage. An output end of the voltage boost unit 4 is connected to an input end of the drive unit 6, to supply power to the drive unit 6 by using the second output voltage.

It should be noted that voltage boost circuit topology may be a voltage boost (boost) converter. It should be understood that this is not limited in this embodiment of this application.

Optionally, in a possible implementation, the drive circuit system 1 further includes PWM 5. An output end of the PWM unit 5 is connected to the drive unit 6, and is configured to provide a pulse voltage and control a change in conducted time of the rectifier transistor 7.

Optionally, in a possible implementation, the control unit 3 may include a digital-to-analog converter DAC unit 32, the first signal may alternatively be a voltage digital signal, and the first value may alternatively be a first voltage numerical value.

FIG. 6 is a schematic diagram of a structure of still another drive circuit system 400 according to another embodiment of this application.

For example, a control unit 3 may be a digital-to-analog conversion DAC unit 32. As shown in FIG. 3, an output end of the digital-to-analog conversion DAC unit 32 is connected to the drive unit 6, and is configured to output voltage to the drive unit 6, so that the drive unit 6 drives the rectifier transistor 7.

For example, when a processing unit 2 determines that a current wave transmission mode of the rectifier transistor 7 is a first wave transmission mode, for example, a complementary wave transmission mode, the processing unit 2 generates a voltage digital signal. In this case, a value of the voltage digital signal is the first voltage numerical value. Then, the processing unit 2 sends the voltage digital signal to the DAC unit 32.

Further, the DAC unit 32 performs digital-to-analog conversion on the first voltage numerical value when a value of the received voltage digital signal is the first voltage numerical value, to obtain a third voltage value V3, and the DAC unit 32 outputs the third voltage value V3 to the drive unit 6, so that the drive unit 6 drives the rectifier transistor 7.

For example, when the processing unit 2 determines that the current wave transmission mode of the rectifier transistor 7 is a second wave transmission mode, for example, a wave-off mode, the state machine unit 2 generates a voltage digital signal. In this case, a value of the voltage digital signal is a second voltage numerical value. Then, the processing unit 2 sends the voltage digital signal to the DAC unit 32.

It should be noted that the first voltage numerical value and the second voltage numerical value described above are both digital parameters of a voltage value.

Further, the DAC unit 32 performs digital-to-analog conversion on the second voltage numerical value when a value of the received voltage digital signal is the second voltage numerical value, to obtain a fourth voltage value V4, and the DAC unit 32 outputs the fourth voltage value V4 to the drive unit 6, so that the drive unit 6 drives the rectifier transistor 7.

For example, when the processing unit 2 determines that the current wave transmission mode of the rectifier transistor 7 is the second wave transmission mode, for example, a rectification slow-spread wave transmission mode, the processing unit 2 generates a voltage digital signal. In this case, a value of the voltage digital signal is the second voltage numerical value. Then, the processing unit 2 sends the voltage digital signal to the DAC unit 32.

Further, the DAC unit 32 performs digital-to-analog conversion on the second voltage numerical value when a value of the received voltage digital signal is the second voltage numerical value, to obtain a fourth voltage value V4, and the DAC unit 32 outputs the fourth voltage value V4 to the drive unit 6, so that the drive unit 6 drives the rectifier transistor 7.

It should be noted that the third voltage value V3 is greater than the fourth voltage value V4. The reason is that a wave transmission frequency in the rectification slow-spread wave transmission mode or the wave-off mode is twice a wave transmission frequency in the complementary wave transmission mode. Therefore, it can be learned from the foregoing formula (1) that, to ensure that the dynamic power consumption of the drive circuit of the synchronous rectifier transistor changes slightly when the synchronous rectifier transistor works under variable frequency, the third voltage value V3 in the complementary wave transmission mode needs to be greater than the fourth voltage value V4 in the rectification slow-spread wave transmission mode or the wave-off mode when the drive circuit is designed to work under variable frequency.

It should be further noted that the value of the digital voltage signal is only an example for description. It should be understood that this is not limited in this embodiment of this application.

Optionally, in a possible implementation, the drive circuit system 1 further includes a voltage boost unit 4.

Specifically, as shown in FIG. 4, an input end of the voltage boost unit 4 is connected to an output end of the control unit 3, and is configured to perform voltage boosting on the first output voltage output by the control unit 3 to obtain a second output voltage. An output end of the voltage boost unit 4 is connected to an input end of the drive unit 6, to supply power to the drive unit 6 by using the second output voltage.

It should be noted that voltage boost circuit topology may be a voltage boost (boost) converter. It should be understood that this is not limited in this embodiment of this application.

Optionally, in a possible implementation, the drive circuit system 1 further includes PWM 5. An output end of the PWM unit 5 is connected to the drive unit 6, and is configured to provide a pulse voltage and control a change in conducted time of the rectifier transistor 7.

The drive circuit system provided in this embodiment of this application can reduce dynamic power consumption change amplitude of a drive circuit of the rectifier transistor when a rectifier transistor works in a variable frequency state, to reduce design difficulty and complexity of a power supply circuit of the drive circuit of the rectifier transistor.

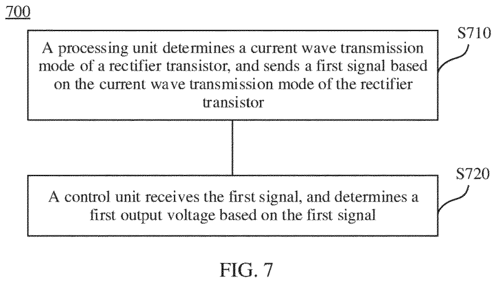

The foregoing describes the drive circuit system provided in embodiments of this application with reference to FIG. 4 to FIG. 6. The following describes, with reference to FIG. 7, a driving method used in the drive circuit system according to an embodiment of this application.

FIG. 7 is a schematic flowchart of a driving method 700 according to an embodiment of this application. The method is used in the drive circuit system in FIG. 4 to FIG. 6.

Specifically, the drive circuit system may include a processing unit, a control unit, a drive unit, and a rectifier transistor. An output end of the processing unit is connected to an input end of the control unit, an output end of the control unit is connected to an input end of the drive unit, the drive unit includes two output ends, one output end is grounded, the other output end is connected to an input end of the rectifier transistor, and the drive unit is configured to drive the rectifier transistor.

As shown in FIG. 7, the method 700 may include the following steps.

S710: The processing unit determines a current wave transmission mode of the rectifier transistor, and sends a first signal based on the current wave transmission mode of the rectifier transistor.

S720: The control unit receives the first signal, and determines a first output voltage based on the first signal.

The first output voltage is used to supply power to the drive unit.

Specifically, the processing unit may determine the current wave transmission mode of the rectifier transistor based on a detected current wave transmission frequency of the rectifier transistor, or the drive circuit system may notify the processing unit of the current wave transmission mode of the rectifier transistor. It should be understood that, for a case in which the processing unit determines the current wave transmission mode of the rectifier transistor, refer to the conventional technology. This is not limited in this embodiment of this application.

Optionally, in a possible implementation, when the processing unit determines that the current wave transmission mode of the rectifier transistor is a first wave transmission mode, the first signal is a first value.

For example, the first signal may be a selection signal (mod-sel), and the control unit may be a selection switching unit.

Specifically, when the first wave transmission mode includes a complementary wave transmission mode, that is, when the processing unit determines that the current wave transmission mode of the rectifier transistor is the complementary wave transmission mode, the processing unit generates the selection signal (mod-sel), and a value of the selection signal is the first value, for example, mod-sel=1. Then, the processing unit sends the selection signal (mod-sel) to the selection switching unit.

Further, the selection switching unit receives the first signal (the selection signal (mod-sel)), and when a value of the received first signal is the first value, for example, mod-sel=1, the selection switching unit determines that a value of the first output voltage is a first voltage value V1, and outputs the first voltage value to the drive unit. That is, the selection switching unit supplies power to the drive unit by using the first voltage value V1.

Optionally, in a possible implementation, when the processing unit determines that the current wave transmission mode of the rectifier transistor is a second wave transmission mode, the first signal is a second value.

For example, the first signal may be a selection signal (mod-sel), and the control unit may be a selection switching unit.

Specifically, the second wave transmission mode includes either a wave-off mode or a rectification slow-spread wave transmission mode.

For example, when the processing unit determines that the current wave transmission mode of the rectifier transistor is the wave-off mode, the processing unit generates the selection signal (mod-sel), and when the selection signal is the second value, for example, mod-sel=0, the processing unit sends the selection signal (mod-sel) to the selection switching unit.

Further, when a value of the received first signal (selection signal (mod-sel)) is the second value, for example, mod-sel=0, the selection unit determines that a value of the first output voltage is a second voltage value V2, and the selection unit outputs the second voltage value V2 to the drive unit, that is, the selection switching unit supplies power to the drive unit by using the second voltage value V2.

For example, when the processing unit determines that the current wave transmission mode of the rectifier transistor is the rectification slow-spread wave transmission mode, the processing unit generates the selection signal (mod-sel), and when the selection signal is the second value, for example, mod-sel=0, the processing unit sends the selection signal (mod-sel) to the selection switching unit.

Further, when a value of the received first signal (selection signal (mod-sel)) is the second value, for example, mod-sel=0, the selection unit determines that a value of the first output voltage is a second voltage value V2, and the selection unit outputs the second voltage value V2 to the drive unit, that is, the selection switching unit supplies power to the drive unit by using the second voltage value V2.

It should be noted that the first voltage value V1 is greater than the second voltage value V2.

It should be further noted that the value of the first signal is only an example for description. It should be understood that this is not limited in this embodiment of this application.

Optionally, in a possible implementation, the control unit may include a digital-to-analog converter DAC unit, the first signal may alternatively be a voltage digital signal, and the first value may alternatively be a first voltage numerical value.

For example, when the processing unit determines that the current wave transmission mode of the rectifier transistor is the first wave transmission mode, for example, the complementary wave transmission mode, the processing unit generates the voltage digital signal. In this case, a value of the voltage digital signal is the first voltage numerical value. Then, the processing unit sends the voltage digital signal to the DAC unit.

Further, the DAC unit performs digital-to-analog conversion on the first voltage numerical value when a value of the received voltage digital signal is the first voltage numerical value, to obtain a third voltage value, and the DAC unit outputs the third voltage value V3 to the drive unit, so that the drive unit drives the rectifier transistor.

For example, when the processing unit determines that the current wave transmission mode of the rectifier transistor is the second wave transmission mode, for example, the wave-off mode, the state machine unit generates the voltage digital signal. In this case, the value of the voltage digital signal is a second voltage numerical value. Then, the processing unit sends the voltage digital signal to the DAC unit.

It should be noted that the first voltage numerical value and the second voltage numerical value described above are both digital parameters of a voltage value.

Further, the DAC unit performs digital-to-analog conversion on the second voltage numerical value when the value of the received voltage digital signal is the second voltage numerical value, to obtain a fourth voltage value V4, and the DAC unit outputs the fourth voltage value V4 to the drive unit, so that the drive unit drives the rectifier transistor.

For example, when the processing unit determines that the current wave transmission mode of the rectifier transistor is the second wave transmission mode, for example, the rectification slow-spread wave transmission mode, the processing unit generates the voltage digital signal. In this case, a value of the voltage digital signal is the second voltage numerical value. Then, the processing unit sends the voltage digital signal to the DAC unit.

Further, the DAC unit performs digital-to-analog conversion on the second voltage numerical value when the value of the received voltage digital signal is the second voltage numerical value, to obtain a fourth voltage value V4, and the DAC unit outputs the fourth voltage value V4 to the drive unit, so that the drive unit drives the rectifier transistor.

It should be noted that the third voltage value V3 is greater than the fourth voltage value V4.

It should be further noted that the value of the digital voltage signal is only an example for description. It should be understood that this is not limited in this embodiment of this application.

Optionally, in a possible implementation, the drive circuit system may further include a voltage boost unit, and the method may further include: The voltage boost unit performs voltage boosting on the first output voltage, to obtain a second output voltage.

Specifically, an input end of the voltage boost unit is connected to an output end of the control unit, and is configured to perform voltage boosting on the first output voltage output by the control unit to obtain the second output voltage. An output end of the voltage boost unit is connected to an input end of the drive unit, to supply power to the drive unit by using the second output voltage.

It should be noted that voltage boost circuit topology may be a voltage boost (boost) converter. It should be understood that this is not limited in this embodiment of this application.

Optionally, in a possible implementation, the drive circuit system may further include a pulse width modulation PWM unit, and the method may further include: The pulse width modulation PWM unit provides a pulse voltage, and controls a change in conducted time of the rectifier transistor 7.

The driving method that is used in the drive circuit system and that is provided in this embodiment of this application can reduce dynamic power consumption change amplitude of a drive circuit of the rectifier transistor when the rectifier transistor in a synchronous rectifier circuit works in a variable frequency state, to reduce design difficulty and complexity of a power supply circuit of the drive circuit of the rectifier transistor.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is only an example. For example, division into the units is only logical function division and may be other division during actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A drive circuit system, comprising:

   a processing unit, configured to determine a current wave transmission mode of a rectifier transistor, and send a first signal based on the current wave transmission mode of the rectifier transistor;
   a control unit, configured to receive the first signal, and determine a first output voltage based on the first signal, wherein the first output voltage is used to supply power to a drive unit; and
   the drive unit, configured to drive the rectifier transistor.

2. The system according to claim 1, wherein that the processing unit sends the first signal based on the current wave transmission mode of the rectifier transistor comprises:

   when the current wave transmission mode is a first wave transmission mode, the first signal is a first value; or
   when the current wave transmission mode is a second wave transmission mode, the first signal is a second value, wherein
   a wave transmission frequency of the second wave transmission mode is N times a wave transmission frequency of the first wave transmission mode, and N is an integer greater than or equal to 2.

3. The system according to claim 2, wherein that the control unit determines the first output voltage based on the first signal comprises:

   when the first signal is the first value, determining, by the control unit, that a value of the first output voltage is a first voltage value; or
   when the first signal is the second value, determining, by the control unit, that a value of the first output voltage is a second voltage value, wherein
   the first voltage value is greater than the second voltage value.

4. The system according to claim 2, wherein the control unit comprises a digital-to-analog converter DAC unit, the first signal comprises a voltage digital signal, the first value comprises a first voltage numerical value, and the second value comprises a second voltage numerical value.

5. The system according to claim 4, wherein that the control unit determines the first output voltage based on the first signal further comprises:

   when the voltage digital signal is the first voltage numerical value, determining, by the DAC unit, that a value of the first output voltage is a third voltage value, wherein the third voltage value is a voltage value obtained by performing digital-to-analog conversion on the first voltage numerical value by the DAC unit; or
   when the voltage digital signal is the second voltage numerical value, determining, by the DAC unit, that a value of the first output voltage is a fourth voltage value, wherein the fourth voltage value is a voltage value obtained by performing digital-to-analog conversion on the second voltage numerical value by the DAC unit, wherein the third voltage value is greater than the fourth voltage value.

6. The system according to any one of claims 2 to 5, wherein the first wave transmission mode comprises a complementary wave transmission mode, and the second wave transmission mode comprises a rectification slow-spread wave transmission mode or a wave-off mode.

7. The system according to any one of claims 1 to 6, further comprising:
   a voltage boost unit, wherein the voltage boost unit is configured to perform voltage boosting on the first output voltage, to obtain a second output voltage.

8. The system according to any one of claims 1 to 7, wherein the rectifier transistor comprises a rectifier diode or a transistor.

9. A circuit driving method, wherein the circuit driving method is used in a drive circuit system, the drive circuit system comprises a processing unit, a control unit, and a drive unit, and the method comprises:

   determining, by the processing unit, a current wave transmission mode of a rectifier transistor, and sending a first signal based on the current wave transmission mode of the rectifier transistor; and

receiving, by the control unit, the first signal, and determining a first output voltage based on the first signal, wherein the first output voltage is used to supply power to the drive unit.

10. The method according to claim 9, wherein the sending a first signal based on the current wave transmission mode of the rectifier transistor comprises:

when the current wave transmission mode is a first wave transmission mode, the first signal is a first value; or
when the current wave transmission mode is a second wave transmission mode, the first signal is a second value, wherein
a wave transmission frequency of the second wave transmission mode is N times a wave transmission frequency of the first wave transmission mode, and N is an integer greater than or equal to 2.

11. The method according to claim 10, wherein the determining, by the control unit, a first output voltage based on the first signal comprises:

when the first signal is the first value, determining, by the control unit, that a value of the first output voltage is a first voltage value; or
when the first signal is the second value, determining, by the control unit, that a value of the first output voltage is a second voltage value, wherein
the first voltage value is greater than the second voltage value.

12. The method according to claim 10, wherein the control unit comprises a digital-to-analog converter DAC unit, the first signal comprises a voltage digital signal, the first value comprises a first voltage numerical value, and the second value comprises a second voltage numerical value.

13. The method according to claim 12, wherein the determining, by the control unit, a first output voltage based on the first signal further comprises:

when the voltage digital signal is the first voltage numerical value, determining, by the DAC unit, that a value of the first output voltage is a third voltage value, wherein the third voltage value is a voltage value obtained by performing digital-to-analog conversion on the first voltage numerical value by the DAC unit; or
when the voltage digital signal is the second voltage numerical value, determining, by the DAC unit, that a value of the first output voltage is a fourth voltage value, wherein the fourth voltage value is a voltage value obtained by performing digital-to-analog conversion on the second voltage numerical value by the DAC unit, wherein the third voltage value is greater than the fourth voltage value.

14. The method according to any one of claims 10 to 13, wherein the first wave transmission mode comprises a complementary wave transmission mode, and the second wave transmission mode comprises a rectification slow-spread wave transmission mode or a wave-off mode.

15. The method according to any one of claims 9 to 14, wherein the drive circuit system further comprises a voltage boost unit, and the method further comprises:
performing, by the voltage boost unit, voltage boosting on the first output voltage, to obtain a second output voltage.

FIG. 1

FIG. 2

$V_{CC}$

Driver

$C_L$

Q

FIG. 3

400

Control unit

3

Processing unit

2

Voltage boost unit

4

PWM

5

Drive unit

6

7

Drive circuit system

1

FIG. 4

400

FIG. 5

400

FIG. 6

700

| | S710 |
|---|---|
| A processing unit determines a current wave transmission mode of a rectifier transistor, and sends a first signal based on the current wave transmission mode of the rectifier transistor | |

| | S720 |
|---|---|
| A control unit receives the first signal, and determines a first output voltage based on the first signal | |

FIG. 7

Europäisches
Patentamt

European
Patent Office

Office européen
des brevets

# EUROPEAN SEARCH REPORT

**Application Number**

EP 24 17 0770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 760 235 B2 (NETPOWER TECHNOLOGIES INC [US]) 6 July 2004 (2004-07-06) * column 2, lines 35-53; figure 2 * | 1,7-9,15 | INV. H02M3/335 H02M1/08 H02M1/36 |
| A | JP 2020 156150 A (FDK CORP) 24 September 2020 (2020-09-24) * paragraphs [0026], [0027], [0073] - [0076]; figures 1, 3, 7 * | 1-15 | |
| A | CN 101 860 187 A (AIMOSHENG NETWORK ENERGY CO) 13 October 2010 (2010-10-13) * figures 1, 5 * | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 4 September 2024 | van Wesenbeeck, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 17 0770

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2024

| Patent document cited in search report | | Publication date | Patent family member(s) | Publication date |
|---|---|---|---|---|
| US 6760235 | B2 | 06-07-2004 | NONE | |
| JP 2020156150 | A | 24-09-2020 | NONE | |
| CN 101860187 | A | 13-10-2010 | NONE | |

EPO FORM P0459

For more details about this annex : see Official Journal of the European Patent Office, No. 12/82